# EUROPÄISCHE PATENTSCHRIFT

(11) **EP 3 430 504 B1**
(45) Veröffentlichungstag und Bekanntmachung des Hinweises auf die Patenterteilung: **18.03.2020**
(21) Anmeldenummer: 17711136.6
(22) Anmeldetag: 15.03.2017
(51) Int. Cl.: G06F 3/0488, G06F 3/0484

(54) **VERFAHREN ZUR MANIPULATION EINES VON EINER KAMERA EINES INSPEKTIONSSYSTEMS ERFASSTEN FOTOGRAFISCHEN BILDES**
METHOD FOR MANIPULATING A PHOTOGRAPHIC IMAGE CAPTURED BY A CAMERA OF AN INSPECTION SYSTEM
PROCÉDÉ DE MANIPULATION D'UNE IMAGE PHOTOGRAPHIQUE ENREGISTRÉE PAR UNE CAMÉRA D'UN SYSTÈME D'INSPECTION

(30) Priorität: 18.03.2016 DE 102016204540
(43) Veröffentlichungstag der Anmeldung: 23.01.2019
(73) Patentinhaber: Koenig & Bauer AG, 97080 Würzburg (DE)
(72) Erfinder: ENGELHARDT, David, 49124 Georgsmarienhütte (DE); SCHWEERS, Johannes, 33415 Verl (DE)
(74) Vertreter: Koenig & Bauer AG
(86) Internationale Anmeldenummer: PCT/EP2017/056046
(87) Internationale Veröffentlichungsnummer: WO 2017/157971

(56) Entgegenhaltungen:
- EP-A2- 2 631 766
- DE-A1-102007 015 097
- US-A1- 2011 080 341
- US-A1- 2015 212 698

## Beschreibung

Die Erfindung betrifft ein Verfahren zur Manipulation eines von einer Kamera eines Inspektionssystems erfassten fotografischen Bildes gemäß dem Anspruch 1.

Der US 7 414 741 B2 ist ein Inspektionssystem mit einem Bildschirm zur optischen Darstellung eines fotografischen Bildes entnehmbar, wobei dieser Bildschirm eine Steuereinrichtung und eine berührungsempfindliche Bildschirmfläche aufweist.

Durch die DE 10 2013 019 425 A1 ist eine Vorrichtung zur Bedienung von Maschinen und Geräten in der grafischen Industrie bekannt, welche eine Anzeigeeinrichtung aufweisen, wobei eine Bedieneinrichtung mit Touchscreen zur Bedienung der Funktionen der Maschine oder des Geräts in der grafischen Industrie und zur Beeinflussung der Anzeigedarstellung auf der Anzeigeeinrichtung vorgesehen ist und wobei zwischen der Bedieneinrichtung und der Anzeigeeinrichtung eine Kommunikationsverbindung besteht, wobei auf der Bedieneinrichtung und der Anzeigeeinrichtung die gleichen Bildschirminhalte angezeigt werden und wobei mittels des Touchscreens der Bedieneinrichtung die Bildschirminhalte auf der Bedieneinrichtung und der Anzeigeeinrichtung parallel verändert werden.

Durch die DE 10 2007 015 097 A1 ist ein Verfahren zum Messen auf Bedruckstoffen mittels eines Messgeräts und eines Rechners bekannt, wobei dem Rechner die Lage wenigstens eines Referenzpunkts auf dem Bedruckstoff relativ zum Messgerät bekannt ist, wobei über eine Eingabevorrichtung am Rechner ein Messpunkt für die Messung auf dem Bedruckstoff eingegeben wird, wobei der Rechner auf eine dem Bedruckstoff entsprechende Bilddatei Zugriff hat und die Lage des wenigstens einen Referenzpunktes in der Bilddatei ermittelt, wobei der Rechner die relative Position vom angegebenen Messpunkt zum Referenzpunkt in der Bilddatei berechnet, wobei der Rechner anhand der ermittelten relativen Position in der Bilddatei die relative Position des Messpunktes zu dem Referenzpunkt auf dem Bedruckstoff berechnet und wobei das Messgerät den entsprechenden Messpunkt anfährt und auf dem Bedruckstoff vermisst.

Durch die DE 103 19 771 A1 ist ein System zur Inspektion eines Druckbildes bekannt, wobei das System zumindest eine Auswerteeinheit, eine Anzeigevorrichtung und einen Bildsensor aufweist, wobei der Bildsensor ein das Druckbild zumindest teilweise abbildendes Bild aufnimmt, wobei das abgebildete Druckbild zu einer von einer Druckmaschine auf einem Druckträger erzeugten Folge von Druckbildern gehört, wobei die Auswerteeinheit mit dem aufgenommenen Bild korrelierende Daten empfängt und im Vergleich zu gespeicherten Daten mindestens eines zuvor aufgenommenen Bildes oder eines Referenzbildes auswertet, wobei die Anzeigevorrichtung eine grafikfähige Anzeigefläche mit mehreren von der Auswerteeinheit unterschiedlich ansteuerbaren Bereichen aufweist, wobei ein erster Bereich wahlweise ein aktuell aufgenommenes Bild, ein zuvor aufgenommenes Bild oder ein Referenzbild anzeigt und ein zweiter Bereich mindestens ein Eingabefeld und/oder ein Bedienfeld zur Einstellung und/oder Bedienung der Auswerteeinheit und/oder zur Einstellung und/oder Bedienung der Druckmaschine aufweist.

Durch die WO 2014/122280 A1 ist ein System zur Druckmaschinenbedienung einer Druckmaschine, insbesondere einer Bogendruckmaschine, bekannt, mit einem Druckmaschinenleitstand und mehreren in der Druckmaschine verteilt angeordneten, steuerungsseitigen Baugruppen der Druckmaschine, wobei mindestens eine auf Gesten berührungslos reagierende dreidimensional erfassende Erfassungseinrichtung vorgesehen ist, die an dem Druckmaschinenleitstand oder im Bedienbereich des Druckmaschinenleitstands angeordnet und von einer an der Druckmaschine arbeitenden Person mittels eine Geste aktivierbar ist, und mittels derer durch die an der Druckmaschine arbeitenden Person durch Ausführung von Gesten Daten oder Steuersignale oder Informationsaktionen über eine Schnittstelle in Verbindung mit einem an dem Druckmaschinenleitstand angeordneten Großbildmonitor generierbar und übermittelbar sind.

Der Erfindung liegt die Aufgabe zugrunde, ein Verfahren zur Manipulation eines von einer Kamera eines Inspektionssystems erfassten fotografischen Bildes zu schaffen.

Die Aufgabe wird erfindungsgemäß durch die Merkmale des Anspruches 1 gelöst. Die abhängigen Ansprüche zeigen vorteilhafte Weiterbildungen und/oder Ausgestaltungen der gefundenen Lösung.

Die mit der Erfindung erzielbaren Vorteile bestehen insbesondere darin, dass eine Bedienung eines Inspektionssystems mit einem Bildschirm zur optischen Darstellung eines insbesondere von dem Inspektionssystem aufgenommenen fotografischen Bildes verbessert wird. Einzelne konkrete Verbesserungen sind aus der nachfolgenden Beschreibung ersichtlich.

Ein Ausführungsbeispiel der Erfindung ist in den Zeichnungen dargestellt und wird im Folgenden näher beschrieben.

Es zeigen:
- Fig. 1: ein Inspektionssystem mit einem Bildschirm zur optischen Darstellung eines fotografischen Bildes;
- Fig. 2: einen ersten Ausschnitt aus dem in der Fig. 1 dargestellten Bildschirm;
- Fig. 3: einen zweiten Ausschnitt aus dem in der Fig. 1 dargestellten Bildschirm.

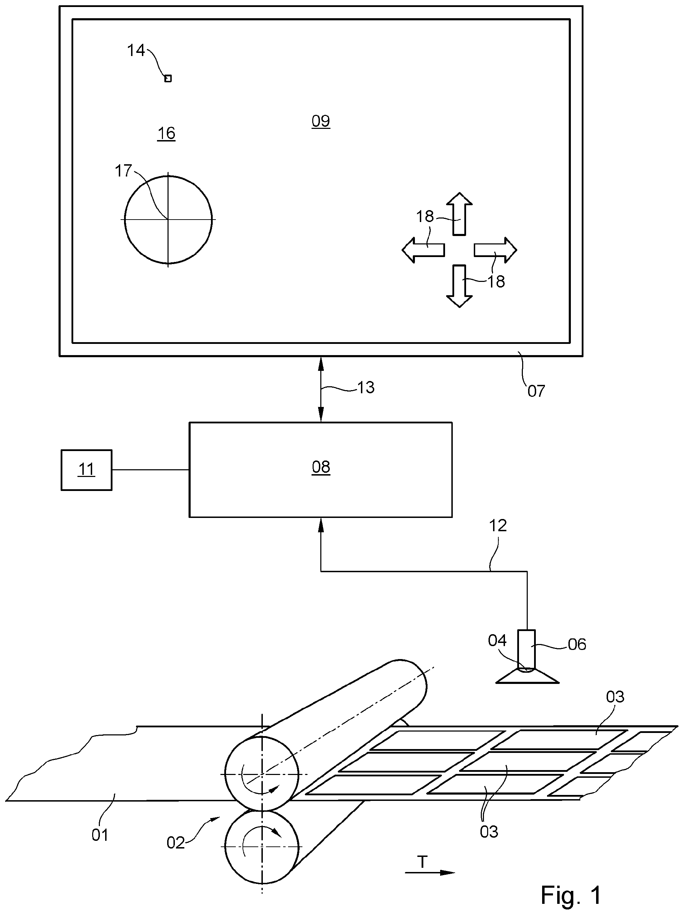

Zur Qualitätssicherung von Druckerzeugnissen werden, wie in der Fig. 1 vereinfacht schematisch dargestellt, in einer z. B. als Rotationsdruckmaschine ausgebildeten Druckmaschine 02 auf einen z. B. als Druckbogen oder Bahn ausgebildeten Bedruckstoff 01 gedruckte Druckbilder 03, die aufgrund des verwendeten Druckverfahrens z. B. aus einer Vielzahl von auf dem Bedruckstoff 01 aufgebrachten Druckbildpunkten bestehen, mit einer mindestens einen optoelektronischen Bildsensor 04 aufweisenden Kamera 06 eines Inspektionssystems fotografisch aufgenommen, wobei der Bildsensor 04 z. B. eine Matrix lichtempfindlicher Fotodioden aufweist und wobei die jeweilige vom Bildsensor 04 vorgenommene fotografische Abbildung des betreffenden gedruckten Druckbildes 03 in computerlesbare, vorzugsweise digitale Bilddaten gewandelt wird, wobei diese Bilddaten von der Kamera 06 über eine Datenleitung 12 einer z. B. digitalen Steuereinrichtung 08 z. B. zur weiteren Verarbeitung und gegebenenfalls Auswertung zugeleitet werden. Die Kamera 06 ist dabei z. B. in der Druckmaschine 02 insbesondere ortsfest angeordnet, wohingegen der Bedruckstoff 01 in einer bestimmten Transportrichtung T durch die Druckmaschine 02 hindurch bewegt wird. Der Bildsensor 04 ist z. B. als ein CCD-Sensor oder als ein CMOS-Sensor ausgebildet. Der Bildsensor 04 ist z. B. als ein Zeilensensor oder als ein Flächensensor ausgebildet. Der Bildsensor 04 ist z. B. als ein monochromer oder als ein Farbsensor ausgebildet.

Manche Druckbilder 03 weisen auf dem Bedruckstoff 01 eine Fläche von mehr als 1 Quadratmeter auf, wohingegen andere Druckbilder 03 sehr viel kleiner ausgebildet sind. Die fotografische Abbildung des betreffenden Druckbildes 03 oder zumindest eines Ausschnitts des betreffenden Druckbildes 03 wird auf einem von der Steuereinrichtung 08 gesteuerten Bildschirm 07 zur optischen Darstellung des von der Kamera 06 des Inspektionssystems aufgenommenen fotografischen Bildes visualisiert, wobei dieser Bildschirm 07 betrachterseitig vorteilhafterweise eine berührungsempfindliche Bildschirmfläche 09 aufweist. Der Bildschirm 07 weist vorzugsweise mehrere in einem Raster angeordnete Bildpunkte auf, wobei die jeweiligen Bildpunkte von der Steuereinrichtung 08 jeweils einzeln angesteuert oder zumindest ansteuerbar sind. Das Raster besteht z. B. aus einer Matrix mit horizontalen Zeilen und vertikalen Spalten, in welchen die einzelnen Bildpunkte jeweils angeordnet sind. Die Anzahl von lichtempfindlichen Punkten des Bildsensors 04 und die Anzahl von Bildpunkten des Bildschirms 07 unterscheiden sind im Regelfall. Der Bildschirm 07 ist z. B. als eine Flüssigkristallanzeige (LCD) ausgebildet, wobei der Bildschirm 07 z. B. mehr als 1 Millionen, vorzugsweise mehr als 2 Millionen Bildpunkte aufweist. Durch die Ansteuerung mehrerer Bildpunkte insbesondere in Verbindung mit einer entsprechend feinen Anordnung der einzelnen Bildpunkte lassen sich in einer Darstellung auf dem Bildschirm 07 beliebige grafische Muster oder Zeichen - nachfolgend allgemein als ein Objekt 14 bezeichnet - aus insbesondere mehreren benachbarten Bildpunkten des vorzugsweise als Matrix ausgebildeten Rasters zusammensetzen, wodurch im vorliegenden Fall insbesondere die in der Steuereinrichtung 08 z. B. als digitale Bilddaten vorliegende, d. h. gespeicherte jeweilige fotografische Abbildung des betreffenden Druckbildes 03 oder zumindest eines Ausschnitts des betreffenden Druckbildes 03 auf dem Bildschirm 07 visualisiert wird. Die Steuereinrichtung 08 stellt auf diese Weise zumindest einen Ausschnitt aus dem aufgenommenen fotografischen Bild auf dem Bildschirm 08 in Form eines Objektes 14 dar, wobei zumindest manche dargestellte Objekte 14 eine Objektfläche von weniger als 1 mm² aufweisen. Die einzelnen Bildpunkte des Bildschirms 07 werden jeweils insbesondere aktiv z. B. durch Dünnschichttransistoren (TFT) angesteuert. Da der Bildschirm 07 vorteilhafterweise eine berührungsempfindliche Bildschirmfläche 09 aufweist und damit als ein Touchscreen ausgebildet ist, bildet dieser zum Inspektionssystem gehörende oder zumindest mit dem Inspektionssystem über eine Daten bidirektional transportierende Datenleitung 13 verbundene Bildschirm 07 für eine Bedienperson dieses Inspektionssystems vorteilhafterweise sowohl ein Eingabegerät als auch ein Ausgabegerät, d. h. also eine Mensch-Maschine-Schnittstelle. Denn durch eine Berührung der Bildschirmfläche 09 sind Daten z. B. in Form eines Steuerbefehls direkt an die Steuereinrichtung 08 eingebbar, woraufhin diese Steuereinrichtung 08 vorzugsweise programmgesteuert wiederum Daten an den Bildschirm 07 ausgibt.

Zur Beurteilung und/oder Sicherstellung einer bestimmten vor dem Druckprozess festgelegten Qualität von Druckerzeugnissen ist es mitunter erforderlich, bestimmte auf dem Bildschirm 07 dargestellte Objekte 14 durch bestimmte Operationen zu manipulieren, z. B. gegenüber einer Umgebung im Druckbild 03 vergrößert darzustellen und/oder anderweitig in einer bestimmten, insbesondere qualitätssichernden Weise z. B. durch eine Eingabe von mindestens einem Steuerbefehl an die Steuereinrichtung 08 zu beeinflussen. Auf einem von einem Menschen üblicherweise mit einem seiner Finger bedienten Touchscreen ist eine solche Eingabe jedoch zumindest erschwert oder gar unmöglich, wenn das auf dem Bildschirm 07 dargestellte Objekt 14, z. B. ein einzelner dargestellter Druckbildpunkt oder eine geringe Anzahl von dargestellten Druckbildpunkten des fotografisch abgebildeten Druckbildes 03, eine Objektfläche von weniger als 1 mm² aufweist, weil der Finger das betreffende Objekt 14 zumindest teilweise oder sogar vollständig abdeckt und damit hinsichtlich des betreffenden Objektes 14 keine ausreichende Treffsicherheit und/oder Auswahlmöglichkeit gegenüber anderen in der Umgebung des betreffenden Objektes 14 dargestellten Objekten 14 besteht.

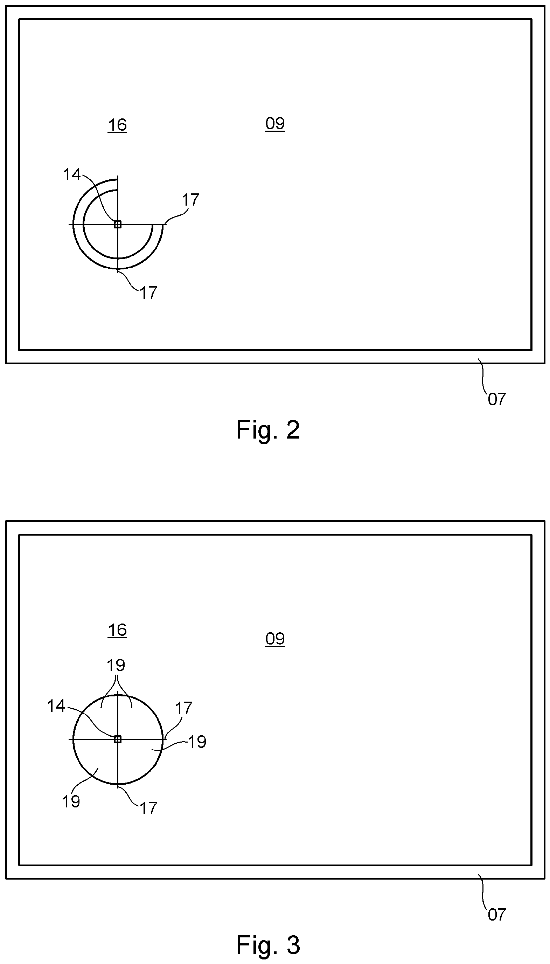

Zur Verbesserung der Auswahlmöglichkeit eines bestimmten auf dem Bildschirm 07 dargestellten Objektes 14 gegenüber anderen in seiner Umgebung dargestellten Objekten 14 wird vorgeschlagen, dass die Steuereinrichtung 08 ausgelöst durch eine Berührung der Bildschirmfläche 09 auf dem Bildschirm 07 ein flächiges Bedienelement 16 mit einer insbesondere zur Bedienung durch den Finger einer Bedienperson ausreichend großen Fläche von mindestens 25 mm² vorzugsweise farbig darstellt, wobei dieses Bedienelement 16 z. B. kreisförmig oder ringförmig ausgebildet ist. Das Bedienelement 16 kann z. B. auch in Form eines Teilkreises oder offenen Ringes dargestellt sein (Fig. 2). Das auf dem Bildschirm 07 dargestellte Bedienelement 16 ist positionsveränderlich ausgebildet und kann aufgrund seiner Größe insbesondere mit einem Finger treffsicher berührt und dann auf dem Bildschirm 07 bewegt, d. h. in seiner Position verändert werden, wobei diese Bewegung des Bedienelementes 16 z. B. durch dessen mit dem Finger vorgenommenes Verschieben erfolgt. Das Bedienelement 16 weist auch eine Markiereinrichtung 17 z. B. in Form von z. B. gekreuzten Haarlinien oder eines Fadenkreuzes auf, wobei die Markiereinrichtung 17 des Bedienelementes 16 durch eine Positionsveränderung dieses Bedienelementes 16 an einer durch das auszuwählende Objekt 14 gegebenen Position positioniert oder zumindest positionierbar ist. Somit ist die Markiereinrichtung 17 des Bedienelementes 16 vorzugsweise als eine Zieleinrichtung zum Einstellen der durch das auszuwählende Objekt 14 gegebenen Position ausgebildet. Das Bedienelement 16 weist mindestens eine von der Steuereinrichtung 08 aktivierbare, insbesondere geschaltete oder zumindest schaltbare Funktion auf, wobei die Steuereinrichtung 08 ausgelöst durch die erfolgreiche Positionierung der Markiereinrichtung 17 des Bedienelementes 16 an der durch das auszuwählende Objekt 14 gegebenen Position hinsichtlich des Bedienelementes 16 die Funktion eines Manipulationswerkzeuges aktiviert, d. h. einschaltet, wobei mit dem die Funktion des Manipulationswerkzeuges aufweisenden Bedienelement 16 die Darstellung des ausgewählten Objektes 14 auf dem Bildschirm 07 durch die so erfolgte Eingabe mindestens eines Steuerbefehls an die Steuereinrichtung 08 und daraufhin als Reaktion von der Steuereinrichtung 08 an den Bildschirm 07 ausgegebener Daten manipuliert oder zumindest manipulierbar ist. Alternativ oder zusätzlich zur Positionsveränderung des Bedienelementes 16 durch den Finger eines Menschen kann vorgesehen sein, dass das Bedienelement 16 durch mindestens ein von der Steuereinrichtung 08 auf dem Bildschirm 07 dargestelltes, d. h. virtuelles Steuerelement 18 positionierbar ist, wodurch eine sehr feine, d. h. bildpunktgenaue Positionierung des Bedienelementes 16 möglich ist. In einer sehr vorteilhaften Ausgestaltung der gefundenen Lösung ist eine Größe der Fläche des Bedienelementes 16 von der Steuereinrichtung 08 in Abhängigkeit von einer Größe der Bildschirmfläche 09 festgelegt. Auch kann vorgesehen sein, dass die Größe der Fläche des Bedienelementes 16 davon unabhängig ist, ob das auf dem Bildschirm 07 dargestellte Objekt 14 in seiner Originalgröße oder vergrößert oder verkleinert dargestellt ist.

Fig. 3 zeigt einen weiteren Ausschnitt aus dem in der Fig. 1 dargestellten Bildschirm 07. Das auf dem Bildschirm 07 dargestellte Bedienelement 16 ist vorzugsweise in mehrere Segmente 19 aufgeteilt, wobei mit jedem dieser Segmente 19 eine andere Manipulation in der Darstellung des ausgewählten Objektes 14 auslösbar ist. Insbesondere löst eine Berührung eines bestimmten Segmentes 19 des Bedienelementes 16 z. B. in Form eines Antippens des bestimmten Segmentes 19 eine bestimmte von den übrigen Segmenten 19 verschiedene Manipulation in der Darstellung des ausgewählten Objektes 14 aus, z. B. ein Hineinzoomen oder Herauszoomen des ausgewählten Objektes 14.

Eine weitere vorteilhafte Ausgestaltung der gefundenen Lösung sieht vor, dass eine in der Dauer ihrer Zeitmessung einstellbare mit der Steuereinrichtung 08 verbundene Zeitmesseinrichtung 11 vorgesehen ist, wobei die Zeitmesseinrichtung 11 ihre Zeitmessung startet, sobald das insbesondere mit dem Finger berührte Bedienelement 16 für seine Positionsveränderung bewegt wird. Die Steuereinrichtung 08 fixiert das Bedienelement 16 dann an seiner aktuellen Position auf dem Bildschirm 07, wenn die Bewegung des Bedienelementes 16 vor Ablauf der für die Zeitmessung eingestellten Dauer endet. Die in der Zeitmesseinrichtung 11 einstellbare Dauer für die Zeitmessung liegt z. B. im Bereich von 50 ms und 250 ms und beträgt vorzugsweise etwa 150 ms. Da das Bedienelement 16 an seiner aktuellen Position auf dem Bildschirm 07 von der Steuereinrichtung 08 fixiert wird, wenn die Bewegung des Bedienelementes 16 vor Ablauf der für die Zeitmessung eingestellten Dauer endet, wird ein nach der Positionierung unbeabsichtigtes Verschieben des Bedienelementes 16 verhindert. Wenn die Bewegung des Bedienelementes 16 länger anhält als die für die Zeitmessung eingestellte Dauer, wiederholt sich der beschriebene Vorgang, indem die Zeitmessung der Zeitmesseinrichtung 11 erneut startet. Der aktuelle Zustand des Bedienelementes 16, d. h. ob es fixiert ist oder nicht, wird z. B. dadurch angezeigt, dass die Steuereinrichtung 08 das Bedienelement 16 in Abhängigkeit von seinem Zustand z. B. verschiedenfarbig und/oder in seiner Geometrie verändert darstellt.

Mithin ergibt sich ein vorzugsweise in einer Druckmaschine, insbesondere in einer Bogendruckmaschine angeordnetes Inspektionssystem mit einem vorzugsweise hochauflösenden Bildschirm 07 zur optischen Darstellung eines insbesondere von diesem Inspektionssystem aufgenommenen fotografischen Bildes, wobei dieser Bildschirm 07 eine Steuereinrichtung 08 und eine berührungsempfindliche Bildschirmfläche 09 aufweist, wobei die Steuereinrichtung 08 zumindest einen Ausschnitt aus dem fotografischen Bild auf dem Bildschirm 08 in Form eines auszuwählenden Objektes 14 mit einer Objektfläche von weniger als 1 mm² darstellt, wobei die Steuereinrichtung 08 ausgelöst durch eine Berührung der Bildschirmfläche 09 auf dem Bildschirm 07 ein flächiges Bedienelement 16 mit einer Fläche von mindestens 25 mm² darstellt, wobei das auf dem Bildschirm 07 dargestellte Bedienelement 16 positionsveränderlich ist, wobei das Bedienelement 16 eine Markiereinrichtung 17 aufweist, wobei die Markiereinrichtung 17 des Bedienelementes 16 durch eine Positionsveränderung dieses Bedienelementes 16 an einer durch das auszuwählende Objekt 14 gegebenen Position positioniert oder zumindest positionierbar ist, wobei das Bedienelement 16 mindestens eine von der Steuereinrichtung 08 geschaltete oder zumindest schaltbare Funktion aufweist, wobei die Steuereinrichtung 08 ausgelöst durch die Positionierung der Markiereinrichtung 17 des Bedienelementes 16 an der durch das auszuwählende Objekt 14 gegebenen Position hinsichtlich des Bedienelementes 16 die Funktion eines Manipulationswerkzeuges einschaltet, wobei mit dem die Funktion des Manipulationswerkzeuges aufweisenden Bedienelement 16 die Darstellung des ausgewählten Objektes 14 auf dem Bildschirm 07 manipuliert oder zumindest manipulierbar ist. Dieses Inspektionssystem kann gemäß einzelner oder mehrerer vorstehend beschriebener Merkmale weitergebildet und/oder ausgestaltet sein.

Ebenso ergibt sich ein Verfahren zur Manipulation eines von einer Kamera 06 eines Inspektionssystems erfassten fotografischen Bildes, bei dem das von der Kamera 06 erfasste fotografische Bild auf einem eine Steuereinrichtung 08 und eine berührungsempfindliche Bildschirmfläche 09 aufweisenden Bildschirm 07 optisch dargestellt wird, wobei die Steuereinrichtung 08 auf dem Bildschirm 07 ein positionsveränderliches Bedienelement 16 mit einer Markiereinrichtung 17 darstellt, wobei an einer beliebigen Position in dem auf dem Bildschirm 08 darstellten fotografischen Bild ein Objekt 14 mit einer Objektfläche von weniger als 1 mm² dadurch ausgewählt wird, dass die Markiereinrichtung 17 des Bedienelementes 16 durch eine Positionsveränderung dieses Bedienelementes 16 an der Position des ausgewählten Objekt 14 positioniert wird, wobei die Steuereinrichtung 08 ausgelöst durch diese Positionierung der Markiereinrichtung 17 des Bedienelementes 16 ein Manipulationswerkzeug aktiviert, wobei mit dem Manipulationswerkzeug nur das ausgewählte Objekt 14 unabhängig vom übrigen auf dem Bildschirm 08 darstellten fotografischen Bild manipuliert wird. Ein auszuwählendes Objekt 14 wird z. B. durch einen einzelnen Bildpunkt des Bildschirms 07 oder durch eine Gruppe insbesondere benachbarter Bildpunkte des Bildschirms 07 gebildet.

In der bevorzugten Ausführung stellt die Steuereinrichtung 08 das positionsveränderliche Bedienelement 16 mit seiner Markiereinrichtung 17 ausgelöst durch eine Berührung der Bildschirmfläche 09 auf dem Bildschirm 07 dar und/oder aktiviert das Manipulationswerkzeug an der durch das ausgewählte Objekt 14 gegebenen Position. Mit dem Manipulationswerkzeug wird insbesondere die Darstellung des ausgewählten Objektes 14 auf dem Bildschirm 07 manipuliert, d. h. z. B. die Farbgebung und/oder die Größe und/oder die Form und/oder die Position des ausgewählten Objektes 14. Die Kamera 06 des Inspektionssystems ist vorzugsweise in einer z. B. als eine Bogendruckmaschine ausgebildeten Druckmaschine 02 angeordnet, wobei mit dieser Kamera 06 ein fotografisches Bild von mindestens einem Druckbild 03 auf einem in einer bestimmten Transportrichtung T durch die Druckmaschine 02 hindurchbewegten Bedruckstoff 01 erfasst wird. Natürlich können zur Ausführung des vorgenannten Verfahrens in freier Auswahl auch alle weiteren mit dem beschriebenen Inspektionssystem erwähnten Merkmale verwendet werden.

### Bezugszeichenliste

- 01: Bedruckstoff
- 02: Druckmaschine
- 03: Druckbild
- 04: Bildsensor
- 05: -
- 06: Kamera
- 07: Bildschirm
- 08: Steuereinrichtung
- 09: Bildschirmfläche
- 10: -
- 11: Zeitmesseinrichtung
- 12: Datenleitung
- 13: Datenleitung
- 14: Objekt
- 15: -
- 16: Bedienelement
- 17: Markiereinrichtung
- 18: Steuerelement
- 19: Segment

- T: Transportrichtung

## Patentansprüche

1. Verfahren zur Manipulation eines von einer Kamera (06) eines Inspektionssystems erfassten fotografischen Bildes, bei dem das von der Kamera (06) erfasste fotografische Bild auf einem eine Steuereinrichtung (08) und eine berührungsempfindliche Bildschirmfläche (09) aufweisenden Bildschirm (07) optisch dargestellt wird, wobei die Steuereinrichtung (08) auf dem Bildschirm (07) ein positionsveränderliches Bedienelement (16) mit einer Markiereinrichtung (17) darstellt, wobei an einer beliebigen Position in dem auf dem Bildschirm (08) darstellten fotografischen Bild ein Objekt (14) mit einer Objektfläche von weniger als 1 mm² dadurch ausgewählt wird, dass die Markiereinrichtung (17) des Bedienelementes (16) durch eine Positionsveränderung dieses Bedienelementes (16) an der Position des ausgewählten Objekt (14) positioniert wird, **dadurch gekennzeichnet, dass** die Steuereinrichtung (08) ausgelöst durch diese Positionierung der Markiereinrichtung (17) des Bedienelementes (16) ein Manipulationswerkzeug aktiviert, wobei mit dem Manipulationswerkzeug das ausgewählte Objekt (14) unabhängig vom übrigen auf dem Bildschirm (08) darstellten fotografischen Bild manipuliert wird, wobei das Bedienelement (16) durch mindestens ein von der Steuereinrichtung (08) auf dem Bildschirm (07) dargestelltes Steuerelement (18) positioniert wird, wobei das auf dem Bildschirm (07) dargestellte Bedienelement (16) in mehrere Segmente (19) aufgeteilt ist, wobei mit jedem dieser Segmente (19) durch deren jeweilige Berührung jeweils eine andere Manipulation an dem Objekt (14) ausgelöst wird.

2. Verfahren nach Anspruch 1, **dadurch gekennzeichnet, dass** die Steuereinrichtung (08) das positionsveränderliche Bedienelement (16) kreisförmig oder ringförmig darstellt.

3. Verfahren nach Anspruch 1 oder 2 , **dadurch gekennzeichnet, dass** eine Größe der Fläche des Bedienelementes (16) von der Steuereinrichtung (08) in Abhängigkeit von einer Größe der Bildschirmfläche (09) festgelegt wird.

4. Verfahren nach Anspruch 1, 2 oder 3 , **dadurch gekennzeichnet, dass** die Steuereinrichtung (08) das positionsveränderliche Bedienelement (16) mit einer Fläche von mindestens 25 mm² darstellt.

5. Verfahren nach Anspruch 1, 2, 3 oder 4 , **dadurch gekennzeichnet, dass** als Markiereinrichtung (17) des Bedienelementes (16) eine Zieleinrichtung verwendet wird.

6. Verfahren nach Anspruch 1, 2, 3, 4 oder 5 , **dadurch gekennzeichnet, dass** der Bildschirm (07) mehrere in einem Raster angeordnete Bildpunkte aufweist, wobei die jeweiligen Bildpunkte von der Steuereinrichtung (08) jeweils einzeln angesteuert werden.

7. Verfahren nach Anspruch 1, 2, 3, 4, 5 oder 6, **dadurch gekennzeichnet, dass** eine in der Dauer ihrer Zeitmessung einstellbare mit der Steuereinrichtung (08) verbundene Zeitmesseinrichtung (11) vorgesehen ist, wobei die Zeitmesseinrichtung (11) ihre Zeitmessung startet, sobald das Bedienelement (16) für seine Positionsveränderung bewegt wird.

8. Verfahren nach Anspruch 7, **dadurch gekennzeichnet, dass** die Steuereinrichtung (08) das Bedienelement (16) an seiner aktuellen Position auf dem Bildschirm (07) fixiert, wenn die Bewegung des Bedienelementes (16) vor Ablauf der für die Zeitmessung eingestellten Dauer endet.

9. Verfahren nach Anspruch 8, **dadurch gekennzeichnet, dass** die Steuereinrichtung (08) das Bedienelement (16) in Abhängigkeit davon, ob es fixiert ist oder nicht, verschiedenfarbig und/oder in seiner Geometrie verändert darstellt.

10. Verfahren nach Anspruch 1, 2, 3, 4, 5, 6, 7, 8 oder 9, **dadurch gekennzeichnet, dass** die Steuereinrichtung (08) das positionsveränderliche Bedienelement (16) mit seiner Markiereinrichtung (17) ausgelöst durch eine Berührung der Bildschirmfläche (09) auf dem Bildschirm (07) darstellt.

11. Verfahren nach Anspruch 1, 2, 3, 4, 5, 6, 7, 8, 9 oder 10, **dadurch gekennzeichnet, dass** die Steuereinrichtung (08) das Manipulationswerkzeug an der durch das ausgewählte Objekt (14) gegebenen Position aktiviert.

12. Verfahren nach Anspruch 1, 2, 3, 4, 5, 6, 7, 8, 9, 10 oder 11, **dadurch gekennzeichnet, dass** mit dem Manipulationswerkzeug die Darstellung des ausgewählten Objektes (14) auf dem Bildschirm (07) manipuliert wird.

13. Verfahren nach Anspruch 1, 2, 3, 4, 5, 6, 7, 8, 9, 10, 11 oder 12, **dadurch gekennzeichnet, dass** ein auszuwählendes Objekt (14) durch einen einzelnen Bildpunkt des Bildschirms (07) oder durch eine Gruppe benachbarter Bildpunkte des Bildschirms (07) gebildet wird.

14. Verfahren nach Anspruch 1, 2, 3, 4, 5, 6, 7, 8, 9, 10, 11, 12 oder 13, **dadurch gekennzeichnet, dass** die Kamera (06) des Inspektionssystems in einer Druckmaschine (02) angeordnet ist, wobei mit dieser Kamera (06) ein fotografisches Bild von mindestens einem Druckbild (03) auf einem in einer bestimmten Transportrichtung (T) durch die Druckmaschine (02) hindurchbewegten Bedruckstoff (01) erfasst wird.

## Claims

1. A method for manipulating a photographic image captured by a camera (06) of an inspection system, in which the photographic image captured by the camera (06) is displayed visually on a screen (07) which has a control unit (08) and a touch-sensitive screen surface (09), wherein the control unit (08) displays a positionally variable operating element (16) which has a marking device (17) on the screen (07), wherein at any position in the photographic image displayed on the screen (08) an object (14) having an object surface area of less than 1 mm² is selected by positioning the marking device (17) of the operating element (16) at the position of the selected object (14) by changing the position of said operating element (16), **characterized in that** the control unit (08), triggered by this positioning of the marking device (17) of the operating element (16), activates a manipulation tool, wherein the manipulation tool is used to manipulate the selected object (14) independently of the remainder of the photographic image displayed on the screen (08), wherein the operating element (16) is positioned by means of at least one control element (18) displayed on the screen (07) by the control unit (08), wherein the operating element (16) displayed on the screen (07) is divided into a plurality of segments (19), wherein touching each of these segments (19) triggers a different manipulation of the object (14) .

2. The method according to claim 1, **characterized in that** the control unit (08) displays the positionally variable operating element (16) in the form of a circle or a ring.

3. The method according to claim 1 or 2, **characterized in that** the size of the surface area of the operating element (16) is determined by the control unit (08) based upon the size of the screen surface (09).

4. The method according to claim 1, 2 or 3, **characterized in that** the control unit (08) displays the positionally variable operating element (16) with a surface area of at least 25 mm².

5. The method according to claim 1, 2, 3 or 4, **characterized in that** a targeting device is used as the marking device (17) of the operating element (16).

6. The method according to claim 1, 2, 3, 4 or 5, **characterized in that** the screen (07) has multiple pixels arranged in a grid, wherein each of the pixels is actuated individually by the control unit (08).

7. The method according to claim 1, 2, 3, 4, 5 or 6, **characterized in that** a time measuring device (11) is provided, which is connected to the control unit (08) and which can be adjusted in terms of the period of time measurement, wherein the time measuring device (11) starts its time measurement as soon as the operating element (16) is moved to change its position.

8. The method according to claim 7, **characterized in that** if the movement of the operating element (16) ends before the period set for time measurement expires, the control unit (08) will fix the operating element (16) in its current position on the screen (07).

9. The method according to claim 8, **characterized in that** the control unit (08) displays the operating element (16) in a different color and/or with its geometry changed, based upon whether or not it is fixed.

10. The method according to claim 1, 2, 3, 4, 5, 6, 7, 8 or 9, **characterized in that** the control unit (08) displays the positionally variable operating element (16) with its marking device (17) on the screen (07) when triggered by a touch to the screen surface (09).

11. The method according to claim 1, 2, 3, 4, 5, 6, 7, 8, 9 or 10, **characterized in that** the control unit (08) activates the manipulation tool at the position determined by the selected object (14).

12. The method according to claim 1, 2, 3, 4, 5, 6, 7, 8, 9, 10 or 11, **characterized in that** the manipulation tool is used to manipulate the display of the selected object (14) on the screen (07).

13. The method according to claim 1, 2, 3, 4, 5, 6, 7, 8, 9, 10, 11 or 12, **characterized in that** an object to be selected (14) is formed by an individual pixel on the screen (07) or by a group of adjacent pixels on the screen (07).

14. The method according to claim 1, 2, 3, 4, 5, 6, 7, 8, 9, 10, 11, 12 or 13, **characterized in that** the camera (06) of the inspection system is arranged in a printing press (02), wherein this camera (06) is used to capture a photographic image of at least one printed image (03) on a printing substrate (01) moving in a certain transport direction (T) through the printing press (02).

## Revendications

1. Procédé de manipulation d'une image photographique acquise par une caméra (06) d'un système d'inspection, où l'image photographique acquise par la caméra (06) est représentée optiquement sur un écran (07) présentant un dispositif de commande (08) et une surface d'écran (09) tactile, dans lequel le dispositif de commande (08) représente sur l'écran (07) un élément de commande utilisateur (16) à position variable avec un dispositif de marquage (17), dans lequel un objet (14) avec une surface d'objet de moins de 1 mm² est sélectionné en une position quelconque dans l'image photographique représentée sur l'écran (08), par le fait que le dispositif de marquage (17) de l'élément de commande utilisateur (16) est positionné dans la position de l'objet (14) sélectionné par une modification de position de cet élément de commande utilisateur (16), **caractérisé en ce que** le dispositif de commande (08), de façon déclenchée par ce positionnement du dispositif de marquage (17) de l'élément de commande utilisateur (16), active un outil de manipulation, dans lequel l'objet (14) sélectionné est manipulé avec l'outil de manipulation indépendamment du reste de l'image photographique représentée sur l'écran (08), dans lequel l'élément de commande utilisateur (16) est positionné par au moins un élément de commande (18) représenté sur l'écran (07) par le dispositif de commande (08), dans lequel l'élément de commande utilisateur (16) représenté sur l'écran (07) est divisé en plusieurs segments (19), dans lequel respectivement une autre manipulation sur l'objet (14) est déclenchée avec chacun de ces segments (19) par le toucher respectif de ceux-ci.

2. Procédé selon la revendication 1, **caractérisé en ce que** le dispositif de commande (08) représente l'élément de commande utilisateur (16) à position variable en forme de cercle ou d'anneau.

3. Procédé selon la revendication 1 ou 2, **caractérisé en ce qu'**une taille de la surface de l'élément de commande utilisateur (16) est déterminée par le dispositif de commande (08) en fonction d'une taille de la surface d'écran (09).

4. Procédé selon la revendication 1, 2 ou 3, **caractérisé en ce que** le dispositif de commande (08) représente l'élément de commande utilisateur (16) à position variable avec une surface d'au moins 25 mm².

5. Procédé selon la revendication 1, 2, 3 ou 4, **caractérisé en ce qu'**un dispositif de visée est utilisé comme dispositif de marquage (17) de l'élément de commande utilisateur (16).

6. Procédé selon la revendication 1, 2, 3, 4 ou 5, **caractérisé en ce que** l'écran (07) présente plusieurs points d'image disposés dans une grille, dans lequel les points d'image respectifs sont commandés respectivement individuellement par le dispositif de commande (08).

7. Procédé selon la revendication 1, 2, 3, 4, 5 ou 6, **caractérisé en ce qu'**un dispositif de mesure de temps (11) relié au dispositif de commande (08), réglable dans la durée de sa mesure de temps, est prévu, dans lequel le dispositif de mesure de temps (11) démarre sa mesure de temps dès que l'élément de commande utilisateur (16) est déplacé pour sa modification de position.

8. Procédé selon la revendication 7, **caractérisé en ce que** le dispositif de commande (08) fixe l'élément de commande utilisateur (16) dans sa position actuelle sur l'écran (07), lorsque le déplacement de l'élément de commande utilisateur (16) se termine avant l'expiration de la durée réglée pour la mesure de temps.

9. Procédé selon la revendication 8, **caractérisé en ce que** le dispositif de commande (08) représente l'élément de commande utilisateur (16), selon qu'il est fixé ou non, en différentes couleurs et/ou de manière modifiée dans sa géométrie.

10. Procédé selon la revendication 1, 2, 3, 4, 5, 6, 7, 8 ou 9, **caractérisé en ce que** le dispositif de commande (08) représente l'élément de commande utilisateur (16) à position variable sur l'écran (07) avec son dispositif de marquage (17) de façon déclenchée par un toucher de la surface d'écran (09).

11. Procédé selon la revendication 1, 2, 3, 4, 5, 6, 7, 8, 9 ou 10, **caractérisé en ce que** le dispositif de commande (08) active l'outil de manipulation au niveau de la position donnée par l'objet (14) sélectionné.

12. Procédé selon la revendication 1, 2, 3, 4, 5, 6, 7, 8, 9, 10 ou 11, **caractérisé en ce que** la représentation de l'objet (14) sélectionné sur l'écran (07) est manipulée avec l'outil de manipulation.

13. Procédé selon la revendication 1, 2, 3, 4, 5, 6, 7, 8, 9, 10, 11 ou 12, **caractérisé en ce qu'**un objet (14) à sélectionner est formé par un point d'image individuel de l'écran (07) ou par un groupe de points d'image voisins de l'écran (07).

14. Procédé selon la revendication 1, 2, 3, 4, 5, 6, 7, 8, 9, 10, 11, 12 ou 13, **caractérisé en ce que** la caméra (06) du système d'inspection est disposée dans une machine à imprimer (02), dans lequel une image photographique d'au moins une image à imprimer (03) sur un matériau à imprimer (01) déplacé à travers la machine à imprimer (02) dans une direction de transport (T) définie est acquise avec cette caméra (06).
